# EUROPÄISCHE PATENTSCHRIFT

(11) **EP 2 829 776 B1**
(45) Veröffentlichungstag und Bekanntmachung des Hinweises auf die Patenterteilung: **20.06.2018**
(21) Anmeldenummer: 13177655.1
(22) Anmeldetag: 23.07.2013
(51) Int. Cl.: F16K 3/08, E03C 1/02, F16K 27/04

(54) **Absperrventiloberteil**
Shut-off valve top
Partie supérieure de vanne d'arrêt

(43) Veröffentlichungstag der Anmeldung: 28.01.2015
(73) Patentinhaber: Flühs Drehtechnik GmbH, 58515 Lüdenscheid (DE)
(72) Erfinder: Thurau, Friedrich, 58849 Herscheid (DE)
(74) Vertreter: Patentanwälte Dörner & Kötter PartG mbB

(56) Entgegenhaltungen:
- EP-A1- 0 711 947
- EP-A1- 1 696 158
- EP-A2- 0 065 266
- DE-U1- 9 317 131
- US-A- 4 651 770

## Beschreibung

Die Erfindung betrifft ein Leitungsteil nach dem Oberbegriff des Anspruchs 1. Absperrventile werden beispielsweise als Absperrorgane für Leitungssysteme mit mehreren Verbrauchern, wie beispielsweise in einer Wohnung oder auch in einem Haus eingesetzt. Ein solches Absperrventil ist beispielsweise in der DE 254 92 63 A1 beschrieben. Das Absperrventil weist ein Kopfstück aus, dass von einer drehbar gelagerten Spindel durchsetzt ist, welche endseitig mit einem Ventilkörper in Verbindung steht, welcher bei Drehung der Spindel gegen den Ventilteller eines Ventilsitzes einer Fluidleitung gepresst wird, wodurch die Absperrung bewirkt ist. Der Ventilsitz der Fluidleitung ist dabei häufig als Kunststoffspritzgussteil ausgebildet, wobei in den Ventilsitz eine metallische, ein Innengewinde aufweisende Gewindehülse eingespritzt ist. In die Gewindehülse wird anschließend das Absperrventiloberteil eingeschraubt. Nachteilig an dem vorbekannten Absperrventiloberteil ist, dass es anfällig für Verkalkungen beziehungsweise Ablagerungen ist. Darüber hinaus erfordert eine Absperrung der Fluidleitung mehrere Umdrehungen der Spindel, bis der Ventilkörper gegen den Ventilteller des Ventilsitzes gepresst ist. Darüber hinaus erweisen sich derartige Absperrventile oftmals als schwergängig.

Aus der EP 0 065 266 A2 oder EP 1 696 158 A1 ist ein Ventiloberteil für Armaturen bekannt, in dem das Ventil von einer Steuerscheibe und einer Einlassscheibe gebildet ist, welche jeweils aus Keramik hergestellt sind. Das Kopfstück besteht aus einem symmetrischen Hohlkörper, dessen beide Stirnflächen offen sind, wobei in dem Kopfstück Durchtrittsfenster angeordnet sind, welche bei geöffneter Position von Steuerscheibe und Einlassscheibe mit dem Wasserzulauf verbunden sind. Mittels eines solchen Ventiloberteils ist eine Absperrung des Fluiddurchflusses durch lediglich eine Viertelumdrehung der Spindel möglich. Derartige Ventiloberteile sind jedoch in den zuvor beschriebenen Kunststoff-Ventilsitz einer Fluidleitung nicht einsetzbar, da die Gewindehülse beziehungsweise der daran anschließende zylindrische Durchgang des Ventilsitzes die Durchtrittsfenster des Kopfstücks verschließen würden. Die Anordnung eines Hinterschnitts an dem Ventilsitz, der bei Armaturen, in denen das vorgenannte Ventiloberteil eingesetzt wird, regelmäßig vorgesehen ist, ist hier jedoch aufgrund des Herstellungsprozesses des Kunststoff-Ventilsitzes nicht möglich. Hierbei wird in die zylindrische Öffnung des auszuformenden Ventilsitzes durch die zu umspritzende Gewindehülse hindurch ein Dorn platziert, der nach Plastifizierung des Kunststoffmaterials wieder heraus gezogen wird. Die Ausbildung eines Hinterschnitts im Bereich der Durchtrittsfenster des Kopfstücks des Ventiloberteils ist daher nicht möglich, da anderenfalls der Dorn nach dem Spritzvorgang nicht mehr gezogen werden könnte.

EP 0 711 947 A1 offenbart ein Absperrventil für Kunststoff-Rohrleitungen mit einem metallischen, den Ventilsitz bildenden und ein Innengewinde zum Einschrauben des die Ventilspindel mit dem Ventilteller führenden Ventilkörpers aufweisenden Ventilgehäuse, das mit Kunststoff zu einem Ein- und Auslaßstutzen aufweisenden Formkörper umgossen bzw. umspritzt ist. Hier will die Erfindung Abhilfe schaffen. Der Erfindung liegt die Aufgabe zugrunde, ein Absperrventiloberteil zum Einschrauben in den Kunststoff-Ventilsitz einer Fluidleitung zu schaffen, das leichtgängig über eine Viertelumdrehung der Spindel zu öffnen beziehungsweise zu schließen ist und bei dem Verkalkungen beziehungsweise Ablagerungen vermieden sind. Gemäß der Erfindung wird diese Aufgabe durch die Merkmale des gekennzeichneten Teils des Patentanspruchs 1 gelöst.

Die Erfindung betrifft ein Leitungsteil mit einem eine zylindrische Ausnehmung aufweisenden Kunststoff-Ventilsitz, in den eine metallische, ein Innengewinde aufweisende Gewindehülse eingespritzt ist, wobei in dem Ventilsitz ein Absperrventil der vorgenannten Art eingebracht ist, dessen Gewindestück in das Innengewinde des Gewinderings eingeschraubt ist, derart, dass zwischen einem Bereich des Innengewindes und des hülsenförmigen Teils des Kopfstücks des Absperrventils ein Spalt zum Fluiddurchtritt gebildet ist. Bevorzugt geht der Gewindering dabei in eine zylindrische Ausnehmung über, deren Innendurchmesser dem Innendurchmesser des Innengewindes des Gewinderings entspricht.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

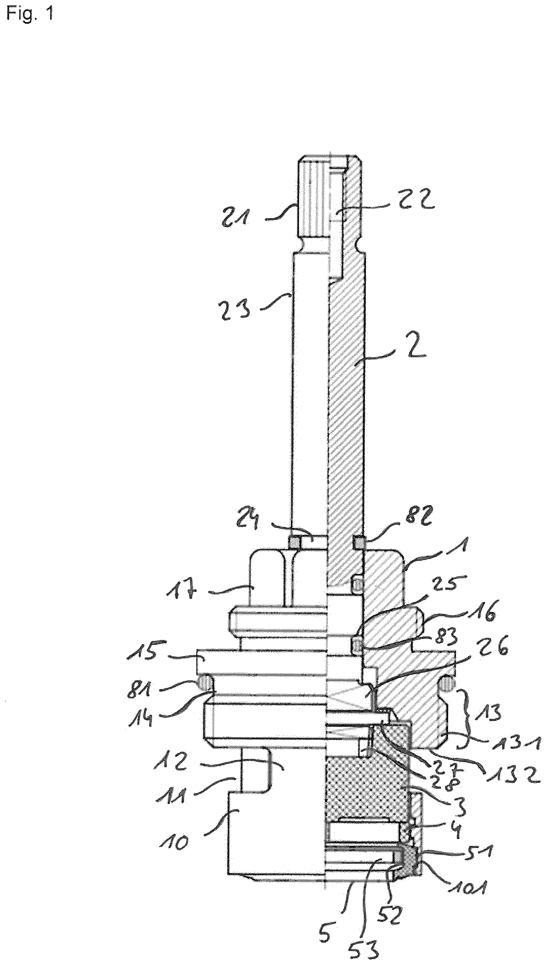

- Figur 1: die schematische Darstellung eines Ventiloberteils in axialem Teilschnitt;
- Figur 2: die Darstellung eines in den Kunststoff-Ventilsitz einer Fluidleitung eingebrachten Ventiloberteils gemäß Figur 1 und

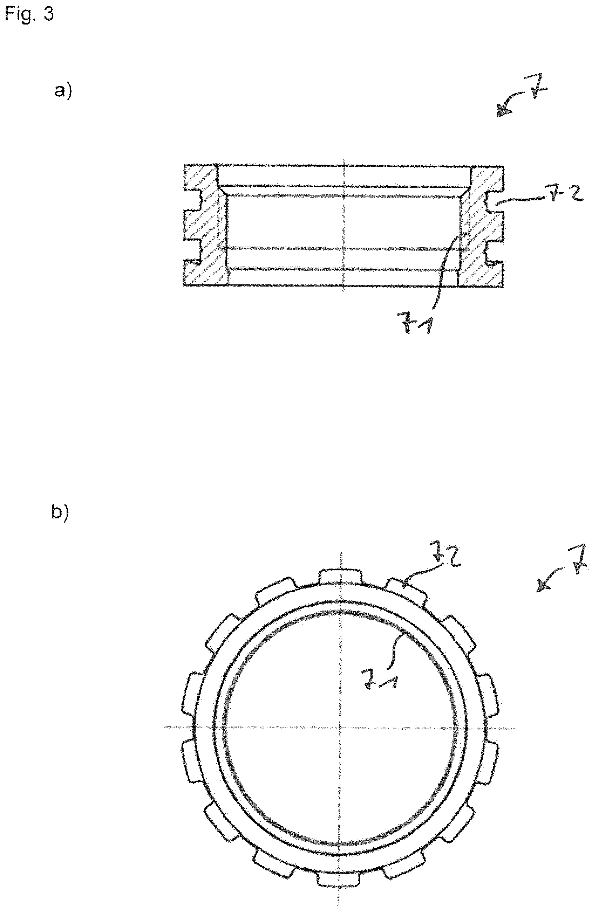

- Figur 3: die Darstellung der in den Kunststoff-Ventilsitz der Fluidleitung aus Figur 2 eingespritzten Gewindehülse
a) im Längsschnitt;
b) in der Draufsicht.

Das als Ausführungsbeispiel gewählte Ventiloberteil weist ein Kopfstück 1 auf, das von einer in ihm radial geführten Spindel 2 mittig durchsetzt ist. Über die Spindel 2 ist ein Ventil betätigbar, das mit dem Ventilsitz 61 eines Leitungsteils 6 zur Anlage kommt. Das Ventil ist von einer Steuerscheibe 3 und einer Einlassscheibe 4 gebildet, die aus Keramik hergestellt sind. Die Steuerscheibe 3 ist mit der Spindel 2 formschlüssig verbunden und im Kopfstück 1 radial geführt. An ihrer der Spindel 2 abgewandten Seite der Steuerscheibe 3 ist die Einlassscheibe 4 in dem Kopfstück 1 angeordnet, an die sich ein Dichtring 5 anschließt, der mit dem Ventilsitz 61 des Leitungsteils 6 zur Anlage kommt.

Das Kopfstück 1 besteht aus einem symmetrischen Hohlkörper, dessen beide Stirnflächen offen sind. Auf der dem Leitungsteil 6 zugewandten Seite weist das Kopfstück 1 einen hülsenartigen Teil 10 auf. In dem hülsenartigen Teil 10 sind zwei Durchtrittsfenster 11 eingebracht, die von Längsstegen 12 begrenzt sind. Innen ist in dem hülsenartigen Teil 10 im Bereich des dem Ventilsitz 61 zugewandten Endes eine Hinterdrehung 101 zur Aufnahme des Dichtrings 5 angeordnet.

Im Anschluss an die Fenster 11 ist an dem Kopfstück 1 außen umlaufend ein Gewindestück 13 angeformt, welches ein Außengewinde 131 aufweist und gegenüber dem hülsenartigen Teil 10 einen Absatz 132 ausbildet. Benachbart zu dem Außengewinde 131 des Gewindestücks 13 ist eine Dichtfläche 14 ausgebildet, an der ein O-Ring 81 anliegt. Die Dichtfläche 14 ist glatt und gewindelos ausgeführt. An die Dichtfläche 14 schließt sich ein umlaufender Kragen 15 an, der das Außengewinde 131 des Gewindestücks 13 umlaufend überragt. Beabstandet zu dem Kragen 15 ist an dessen der Spindel 2 zugewandten Seite ein im Durchmesser vermindertes zweites Außengewinde 16 angeordnet, an das sich ein Sechskant-Abschnitt 17 zum Eingriff eines Schraubenschlüssels anschließt.

Die Spindel 2 ist im Wesentlichen massiv ausgeführt. Sie ist an ihrer dem Kopfstück 1 abgewandten Stirnseite außen als Außenvielkant 21 ausgeführt und mit einem Sackloch 22 mit Innengewinde für die Befestigung eines - nicht dargestellten - Drehgriffs versehen. Anschließend ist außen an der Spindel eine Zylinderfläche 23 vorgesehen, mit der die Spindel 2 in dem Kopfstück 1 radial geführt ist. In der Zylinderfläche ist ein Einstich 24 zur Aufnahme einer Wellensicherung 82 eingebracht. Auf der dem Kopfstück zugewandten Seiten der Wellensicherung 82 sind beabstandet zueinander zwei Ringnuten 25 zur Aufnahme eines O-Rings 83 eingebracht. Die O-Ringe 83 dichten die Spindel 2 gegen das Kopfstück 1 ab.

Die Spindel 2 ist in dem Kopfstück 1 begrenzt drehbar. Auf der dem Außenvielkant 21 entgegengesetzten Seite ist zu diesem Zweck außen an der Spindel ein Quersteg 26 angeformt. Der Quersteg 26 ist zwischen einem innen im Kopfstück 1 vorgesehenen Anschlag drehbar. An den Quersteg 26 schließt sich eine Scheibe 27 an, die auf ihrer dem hülsenartigen Teil 10 zugewandten Seite einen Mitnehmer 28 aufweist.

Die Steuerscheibe 3 ist in vorbekannter Art und Weise ausgebildet und weist zwei sich gegenüber liegende Kreisausschnitte auf, die im Ausführungsbeispiel einen Winkel von ca. 90 Grad aufweisen. Auf ihrer der Spindel 2 zugewandten Seite weist die Steuerscheibe 3 einen ringförmigen Ansatz 31 auf. Der ringförmige Ansatz 31 umfasst im montieren Zustand den Mitnehmer 28 der Spindel 2. Am Fuß des Ansatzes 31 sind Ausnehmungen ausgebildet, in die der Mitnehmer 28 fasst.

Die Einlassscheibe 4 weist auf ihrem Umfang zwei - nicht dargestellte - sich diametral gegenüberliegende Nasen auf, mit denen die Scheibe 4 in Ausnehmungen fasst, die in dem hülsenförmigen Teil 10 des Kopfstücks 1 vorgesehen sind. Die Einlassscheibe 4 ist damit drehfest in dem Kopfstück 1 angeordnet. Die Scheibe 4 weist zwei sektorfömige Durchtrittsöffnungen auf, welche in einer Stellung der Spindel 2 mit den beiden gegenüberliegenden Kreisausschnitten der Steuerscheibe 3 fluchten.

Der Dichtring 5 ist nach Art einer Lippendichtung ausgebildet. Außen umlaufend ist an der Lippendichtung 5 ein Bund 51 angeordnet, der in die Hinterdrehung 101 des hülsenartigen Teils 10 greift. Innen weist die Lippendichtung 5 umlaufend eine Nut 52 zur Aufnahme eines Stützrings 53 auf.

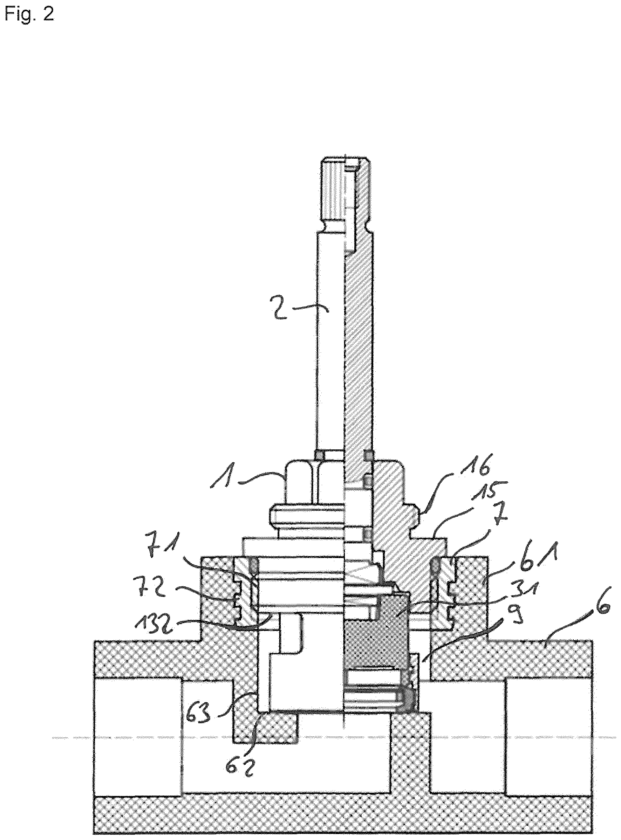

In Figur 2 ist ein Leitungsteil 6 mit einem Kunststoff-Ventilsitz 61 dargestellt, das ein Absperrventiloberteil der zuvor beschriebenen Art aufnimmt. In den Kunststoffventilsitz 61 ist eine ein Innengewinde 71 aufweisende Gewindehülse 7 eingespritzt. Die Innengewindehülse 7 ist hierzu außen umlaufend mit Verzahnungen 72 versehen, über welche sie drehfest in den Kunststoff-Ventilsitz 61 gehalten ist. Im Ausführungsbeispiel ist die Gewindehülse 7 aus Messing hergestellt.

Im montierten Zustand ist das Kopfstück 1 des Absperrventiloberteils mit seinem Gewindestück 13 in die Gewindehülse 7 des Kunststoff-Ventilsitzes 61 des Leitungsteils 6 eingeschraubt, wobei der Dichtungsring 5 auf dem Ventilteller 62 des Kunststoff-Ventilsitzes 61 dichtend aufliegt. Der Kunststoff-Ventilsitz 61 weist eine zylindrische Ausnehmung 63 auf, deren Innendurchmesser im Wesentlichen dem Innendurchmesser der Gewindehülse 7 entspricht. Bedingt durch den Absatz 132 des Gewindestücks 13 ist zwischen der Innenwandung der zylindrischen Ausnehmung 63 und dem hülsenförmigen Teil 10 des Kopfstücks 1 ein umlaufender Spalt 9 ausgebildet, durch den der Zu- beziehungsweise Ablauf durch die Durchtrittsfenster 11 des Kopfstücks 1 gewährleistet ist.

## Patentansprüche

1. Leitungsteil (6) mit einem eine zylindrische Ausnehmung (63) aufweisenden Kunststoff-Ventilsitz (61), der insbesondere keinen Hinterschnitt aufweist und in den eine metallische, ein Innengewinde aufweisende Gewindehülse (7) eingespritzt ist, deren Innendurchmesser dem Innendurchmesser der zylindrischen Ausnehmung entspricht, wobei in den Ventilsitz (61) ein Absperrventil eingebracht ist, das ein Kopfstück umfasst, das von einer drehbar gelagerten Spindel mittig durchsetzt ist, über die zur Steuerung des Fluiddurchflusses eine keramische Steuerscheibe gegenüber einer feststehenden Ventilsitzscheibe verdrehbar ist, wobei das Kopfstück einen hülsenförmigen Teil (10) aufweist, **dadurch gekennzeichnet, dass** in dem hülsenförmigen Teil (10) wenigstens ein Durchtrittsfenster (11) angeordnet ist, das oberhalb des Zulaufs und des Ablaufs des Ventilsitzes (61) angeordnet ist und das bei geöffneter Ventilstellung von einem Fluid durchströmbar ist und dass ein ein Außengewinde aufweisendes Gewindestück (13) an dem hülsenförmigen Teil (10) angeformt ist, über welches das Absperrventil in das Innengewinde der Gewindehülse (7) eingeschraubt ist, welches Gewindestück (13) oberhalb des wenigstens einen Durchtrittsfensters (11) einen Absatz (132) gegenüber dem hülsenartigen Teil (10) ausbildet, derart, dass zwischen dem Innendurchmesser des Innengewindes der Gewindehülse (7) des Ventilsitzes (61) und dem wenigstens ein Durchtrittsfenster (11) aufweisenden hülsenartigen Teil (10) ein umlaufender radialer Spalt zum Fluiddurchtritt gebildet ist.

2. Leitungsteil nach Anspruch 1, **dadurch gekennzeichnet, dass** an dem Gewindestück (13) oberhalb des Außengewindes (131) ein umlaufender Kragen (15) angeformt ist, wobei zwischen dem Kragen (15) und dem Außengewinde (131) ein Dichtring (81) angeordnet ist.

3. Leitungsteil nach Anspruch 2, **dadurch gekennzeichnet, dass** an dem Gewindestück (13) auf seiner dem Außengewinde (131) abgewandten Seite des Kragens (15) ein gegenüber dem Außengewinde (131) durchmesserreduziertes zweites Außengewinde (16) angeordnet ist.

## Claims

1. Pipe section (6) having a plastic valve seat (61) with a cylindrical recess (63) which, in particular, does not have an undercut and into which a metallic threaded sleeve (7) having an internal thread is injected, the inner diameter of which corresponds to the inner diameter of the cylindrical recess, wherein a shut-off valve is inserted in the valve seat (61) which comprises a head piece which is centrally penetrated by a rotatably mounted spindle, via which a ceramic control disc for controlling the fluid flow is rotatable vis-à-vis a fixed valve seat disc, wherein the head piece has a sleeve-shaped part (10), **characterised in that** in the sleeve-shaped part (10) at least one through window (11) is arranged, which is arranged above the inlet and the outlet of the valve seat (61) and which can be flown through by a fluid in an open valve position and that a threaded piece (13) having an external thread is moulded on the sleeve-shaped part (10), via which the shut-off valve is screwed into the internal thread of the threaded sleeve (7), which threaded piece (13) forms a shoulder (132) with respect to the sleeve-shaped part (10) above the at least one through window (11), in a manner that between the inner diameter of the internal thread of the threaded sleeve (7) of the valve seat (61) and the sleeve-shaped part (10) having at least one through window (11), a circumferential radial gap for the passage of fluid is formed.

2. Pipe section (6) according to claim 1, **characterised in that** a circumferential collar (15) is moulded on the threaded piece (13) above the external thread (131), wherein between the collar (15) and the external thread (131) a sealing ring (81) is arranged.

3. Pipe section according to claim 2, **characterised in that** a second external thread (16) reduced in diameter vis-à-vis the external thread (131) is arranged at the threaded piece (13) on its side of the collar (15) facing away from the external thread (131).

## Revendications

1. Partie de conduite (6) avec siège en plastique (61) de vanne présentant un évidement cylindrique (63), siège qui notamment ne présente pas de contre-dépouille et dans lequel a été injectée une douille filetée (7) métallique présentant un filetage intérieur, douille dont le diamètre intérieur correspond au diamètre intérieur de l'évidement cylindrique, sachant que dans le siège (61) de vanne est incorporé une vanne d'arrêt présentant une partie têtière traversée en son centre par une broche en appui rotatif via laquelle il est possible de faire tourner, pour piloter le débit de fluide, un disque de commande en céramique par rapport à un disque fixe du siège de vanne, sachant que la pièce têtière présente une pièce (10) en forme de douille, **caractérisée en ce que** dans la pièce (10) en forme de douille est disposée au moins une lumière de passage (11) située au-dessus du point d'afflux et du point d'évacuation du siège (61) de vanne, et pouvant être traversée par un fluide lorsque la vanne se trouve en position ouverte et **en ce qu'**une pièce filetée (13) présentant un filetage extérieur est moulée contre la pièce (10) en forme de douille, pièce dernière citée via laquelle la vanne d'arrêt est vissée dans le filetage intérieur de la douille filetée (7), laquelle pièce filetée (13) forme au-dessus d'au moins une lumière de passage (11) un talon (132) par rapport à la pièce (10) en forme de douille, de sorte qu'entre le diamètre intérieur du filetage intérieur de la douille filetée (7) du siège (61) de vanne et la pièce (10) en forme de douille présentant au moins une lumière de passage (11), un interstice radial périphérique est formé pour permettre le passage du fluide.

2. Pièce de conduite selon la revendication 1, **caractérisée en ce que** contre la pièce filetée (13) au-dessus du filetage extérieur (131) est moulé un col périphérique (15), sachant qu'entre le col (15) et le filetage extérieur (131) est disposée une bague d'étanchéité (81).

3. Pièce de conduite selon la revendication 2, **caractérisée en ce que** contre la pièce filetée (13), sur son côté du col (15) ne regardant pas le filetage extérieur (131), est disposé un second filetage extérieur (16) d'un diamètre inférieur à celui du filetage extérieur (131).
